# EUROPEAN PATENT SPECIFICATION

(11) **EP 3 796 147 B1**
(45) Date of publication and mention of the grant of the patent: **10.11.2021**
(21) Application number: 19198619.9
(22) Date of filing: 20.09.2019
(51) Int. Cl.: G06F 3/0488, G06F 3/0482, G06F 3/041, G01C 21/36

(54) **METHOD FOR COORDINATING AN ELECTRONIC CONTROL UNIT AND A TOUCH SCREEN INPUT DEVICE IN A MOTOR VEHICLE AND VEHICLE OPERATING APPARATUS AND MOTOR VEHICLE**
VERFAHREN ZUM KOORDINIEREN EINER ELEKTRONISCHEN STEUEREINHEIT UND EINER BERÜHRUNGSBILDSCHIRMEINGABEVORRICHTUNG IN EINEM KRAFTFAHRZEUG UND FAHRZEUGBEDIENVORRICHTUNG UND KRAFTFAHRZEUG
PROCÉDÉ DE COORDINATION D'UNE UNITÉ DE COMMANDE ÉLECTRONIQUE ET DISPOSITIF D'ENTRÉE D'ÉCRAN TACTILE DANS UN VÉHICULE À MOTEUR, APPAREIL DE FONCTIONNEMENT DE VÉHICULE ET VÉHICULE À MOTEUR

(43) Date of publication of application: 24.03.2021
(73) Proprietor: Audi AG, 85045 Ingolstadt (DE)
(72) Inventor: Bujan, Eduardo, 85049 Ingolstadt (DE); Lerzer, Jürgen, 92318 Neumarkt (DE)

(56) References cited:
- EP-A1- 2 254 039
- EP-A1- 3 355 188
- US-A1- 2017 357 361
- US-A1- 2019 051 266

## Description

The invention is concerned with a method for coordinating an electronic control unit and a touch screen input device in a motor vehicle. The electronic control unit operates a graphical user interface (GUI) that is displayed to a user by the touch screen input device. The control unit links a control field of the graphical user interface to a device function that is activated or triggered whenever a user input is received at the control field. For displaying the graphical user interface, the touch screen input device is used, wherein a render monitoring unit of the touch screen input device displays the control field on a touch screen display. By means of the touch screen display, the user input may also be received. The invention also provides a vehicle operating apparatus that may perform the inventive method. Finally, the invention is also concerned with a motor vehicle comprising the inventive vehicle operating apparatus.

A vehicle operating apparatus of the described type is disclosed in DE 10 2017 207 557 A1. One general problem with displaying software based control fields on a graphical user interface is that a control field may be covered by the graphical output of another application that is also displayed on the same display. Therefore, if a graphic control unit sets pixel data for displaying a specific graphical content, like a control field, these pixel data may be disturbed or overwritten by another application such that on the touch screen display another graphical content is overlaying or covering the specific graphical content of the control field originally intended to be displayed. In an electronic control unit operating a graphical user interface it is therefore not certain that a specific control field is actually displayed on the touch screen display.

Document DE 103 40 247 A1 describes a motor vehicle with several displays that are controlled by graphic control unit. For setting pixel data that are to be displayed by the graphic control unit on the display, a multimedia CPU (Central Processing Unit) is provided. However, the multimedia CPU is not able to verify whether the graphic control unit actually displays the pixel data correctly on the display.

Document DE 10 2017 212 056 A1 describes a vehicle operating apparatus that is designed to operate a touch screen display by means of a control unit according to the Standard ASIL-B for detecting touch events. No verification logic for verifying the display content of the display is described.

Document EP 2 254 039 A1 describes a visual display module, which displays information based on an input signal. The display module produces a graphical representation, encoded as a display drive signal, of a numerical or logical value provided by the input signal. The graphical representation is verified by a display supervisor adapted to compare checksums computed on the basis of the display drive signal with reference checksums that are generated on the basis of the input signal.

Document US 2019/051266 A1 describes a computing device with a display controller coupled to a display by a physical link. The computing device generates pixel data in a data buffer in memory, and the display controller outputs a pixel signal on the physical link based on the pixel data using a physical interface.

Document EP 3 355 188 A1 describes a method for operating a control device comprising at least one processor and at least one memory, and a visualization layer adapted to run on the at least one processor, the visualization layer being adapted to assign processor time and memory to a plurality of guest systems running on the visualization layer.

Document US 2017/357361 A1 describes a touch sensor and a method for sensing a touch using the same, the touch sensor including a substrate, a first sensor and a plurality of second sensors provided on the substrate and configured to sense a location and a force of a touch, wherein the first sensor is disposed in a central area of one surface of the substrate, the plurality of second sensors are arranged to surround the first sensor.

It is an object of the present invention to coordinate an electronic control unit and a touch screen input device such that the electronic control unit verifies that the touch screen input device correctly displays a graphical content that has been generated by the electronic control unit.

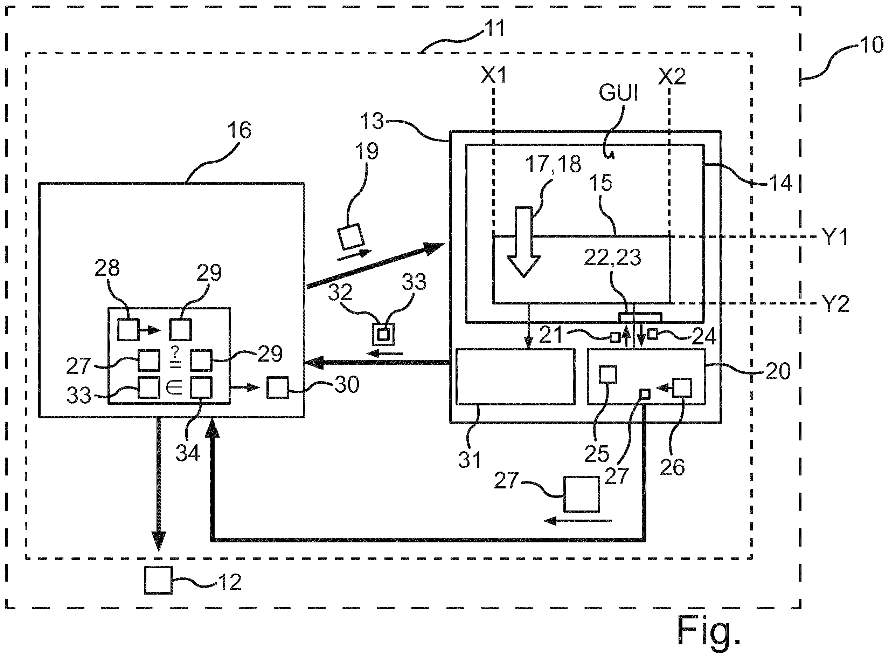

The object is achieved by the subject-matter of the independent claims. Advantageous embodiments of the invention are described by the dependent claims, the following description and the figure.

The invention provides a method for coordinating an electronic control unit and a touch screen input device in a motor vehicle. The electronic control unit provides or operates a graphical user interface (GUI) such that it shows a control field in the graphical user interface and the electronic control unit activates a predefined vehicle function in reaction to receiving a user input at this control field. By "operating a graphical user interface" it is meant that the electronic control unit defines which graphical elements (control fields, like buttons or touch areas) shall be displayed in the graphical user interface and provides the logic or functional dependency between the elements of the graphical user interface and the vehicle functions. In other words, the electronic control unit decides or determines which control field is to be displayed and which vehicle function is to be activated whenever a user input, for example a touch event, is detected at the control field over the touch screen display of the touch screen input device. In the following, the electronic control unit is also referred to as "control unit".

The touch screen input device provides the touch screen display for displaying the graphical user interface, i.e. it displays the graphical information or graphical content showing or illustrating the elements of the graphical user interface, especially said control field. To this end, the touch screen input device receives render data from the control unit and controls the touch screen display for displaying the graphical user interface. On the basis of the render data a graphic control unit may set the individual values (color and/or intensity/brightness) of the pixels of the touch screen display. In other words, the render data may be used as pixel data for setting the pixel values of the touch screen display. This is known from the prior art.

The inventive method further comprises that the electronic control unit (in the following also simply referred to as "control unit") generates the render data for displaying the control field and also supervises whether the render data are displayed correctly. The render data define the position and/or graphical appearance of the control field. The render data may comprise said pixel values for the control field or command data that define the control field. The render data comprise the pixel data that shall be written into the display buffer of the touch screen display. The control unit sends the render data to the touch screen input device. The render data instruct the touch screen input device to display the control field, as is known from the prior art.

Additionally, the control unit calculates first checksum data on the basis of a predefined checksum function. Such a checksum function maps input data (i.e. the render data) onto checksum data. An example for such a checksum function is a hash function or a CRC (cyclic redundancy check). As an input for the checksum function the render data are used in the case of the first checksum data. In other words, the control unit generates a first checksum (described by the first checksum data) such that whenever other data are also processed by the checksum function the control unit may verify whether these other data are identical to the render data.

In the touch screen input device the render the control field is displayed on the basis of the render data. To this end, the touch screen input device sets pixel data in the display buffer of the touch screen display for displaying the control field on the touch screen display (as is known from the prior art). These pixel data may be contained in the received render data or they are derived from these render data. The display buffer may be the data memory of the touch screen display that defines or determines respective color and/or intensity/brightness of single pixels of the touch screen display. Setting the pixel data should display the control field on the touch screen display, if no disturbance occurs. However, this needs to be verified.

To this end the render monitoring unit calculates second checksum data on the basis of the same checksum function that is also used by the control unit. With "same checksum function" it is meant that the same mathematical operations and/or logic is used, but not the same programming code (as the location of the two instanced of the checksum function is different). In other words, the checksum function is implemented twice, once in the control unit and once in the render monitoring unit. In the render monitoring unit, pixel data are provided as an input for the checksum function. The pixel data are read from the display buffer by the render monitoring unit. In other words, the render monitoring unit reads those pixel data that are finally in the display buffer when an image frame is displayed on the touch screen display. These pixel data that are read from the display buffer describe the true graphical content that is actually displayed or output on the touch screen display. The render monitoring unit sends the second checksum data to the control unit.

The control unit receives the second checksum data and compares the received second checksum data with the first checksum data that it has calculated itself on the basis of the render data. If the first and the second checksum data differ from each other, the control unit generates an error signal that signals that the control field is not displayed correctly on the touch screen display. In other words, if the pixel data read from the display buffer result in a different checksum, i.e. the second checksum data that differ from the first checksum data. This means that the render data that were used for setting the pixel data in the display buffer were falsified or overwritten by other pixel data that have also been written into the display buffer afterwards. If this is the case, the touch screen display will not display the control field correctly or as intended by the render data. If, however, the second checksum data and the first checksum data are identical, this verifies to the control unit that the control field has been displayed according to the render data. This means that no error signal is generated.

The invention provides the advantage that inside the control unit it is verified whether the touch screen input device is operating correctly, i.e. according to the render data provided by the control unit. The control unit therefore has means to verify the correct display of an element of the graphical user interface, namely the control field. Such a control field can be designed as a button or knob or slider, just to name a few examples. By means of the method, the control unit verifies or compares pixels that are actually displayed on the touch screen display with the graphical content that is expected by the control unit and that is defined or described by the render data.

The vehicle function that is triggered or controlled by the control field is therefore a so called safety related function such as the control of a blinking hazard light or an emergency call functionality or a control for a roof opening/closing or a spoiler control or a start-stop-functionality.

Note that although the invention is described in connection with a single control field for controlling a single vehicle function, the invention may of course be applied multiple times resulting in the coordination of the electronic control unit and the touch screen input device for displaying not only one, but several control fields that may control several different vehicle functions.

The invention provides that a touch sensing unit of the touch screen input device receives a touch event signal of a touch event from the touch screen display. The touch sensing unit is the electronic circuit evaluating touch event signals that are generated by the touch screen display when a user touches or approaches the display surface of the touch screen display. The touch event signal is generated by a touch sensitive sensing unit of the touch screen display, for example a capacitive sensing unit as known from the prior art. The touch sensing unit generates touch event data that comprise coordinates and/or an area identifier of the touch event and sends the touch event data to the control unit. In other words, the touch event data describe whereon the touch screen display the touch event has been detected according to the touch event signal. The touch event data inform the control unit about the touch event. The control unit verifies that the received touch event data actually signal or describe that the touch event is positioned on the touch screen display within boundaries of the control field as they are defined by the render data. In other words, the control unit does not simply verify that a touch event has been detected, but also verifies, that the touch event is a user input inside the control field as displayed on the touch screen display. If the touch event is detected to lie within the boundaries, the vehicle function is activated. Thus, the vehicle function is only activated, if the control unit positively recognizes that the touch event is positioned within the control field.

The invention provides that the control unit registers a display time interval that describes when the control field is to be displayed according to the render data. In other words, it is notified or stored in the control unit during which display time interval the control field is actually visible on the touch screen display. This display time interval can start when the render data are sent to the render monitoring unit or the display time interval can start according to a starting time defined by the render data. The end of the display time interval can be defined as the point in time when new render data are provided by the control unit wherein the new render data describe a different position of the control field and/or a different control field. By also controlling the time of the touch event, i.e. the event time, and verifying that the event time lies within the display time interval, it is also verified that the user actually saw the control field while touching the touch screen display and therefore generating the touch event.

The invention provides that the verification of the display time interval comprises that the control unit receives a respective sensor signal from at least one sensor for verifying the touch event. In other words, the at least one sensor is different from the actual sensory unit that detects the actual touch event and generates the touch event signal. To this end a respective sensing field of the at least one sensor is directed to a surface and/or surroundings of the touch screen display. The at least one sensor generates its sensor signal as a function of or independence on a presence and/or movement of a predefined touch element in the respective sensing field. Such a touch element can be, for example, a finger of the user. The at least one sensor provides extra or additional redundancy regarding the verification of the touch event.

The invention also comprises embodiments that provide additional advantages.

In one embodiment, the checksum function comprises a calculation of at least one of the following values: a cyclic redundancy check (CRC), a hash value, like, e.g., a SHA-value (SHA - Secure Hash Algorithm). A cyclic redundancy check provides the advantage that the input for calculating the checksum data may be processed sequentially or serially. This results in a small memory footprint of the checksum function. A hash value provides the advantage that it is very unlikely that different input data result in the same checksum data.

In one embodiment, the pixel data for calculating the second checksum data are read from a line buffer of the touch screen display. This line buffer is directly related or connected to the actual pixel elements of the touch screen display. Such that reading the pixel data from the line buffer provides the true or direct information regarding the color and/or intensity/brightness of the respective pixels.

In one embodiment, the render monitoring unit is based on a timing controller, TCON. A timing controller provides the advantage that the pixel data may be read from the display buffer while the actual image frame is created or displayed on the touch screen display. In other words, while the actual single pixel elements are updated with the refresh rate of the touch screen display (for example 50 Hz or 60 Hz), the checksum data can be calculated while the current image frame is generated. This results in a very low delay between a falsely displayed image content and the generation of the corresponding error signal.

In the present invention, the verification of the display time interval comprises that the touch event data are received within the display time interval. Therefore, no specific time measurement is needed as the time of reception defines the event time. In other words, after sending the render data for displaying the control field, the control unit may accept any touch event data as being generated within the display time interval as long as the end of the display time interval is not reached, i.e. the control field is still displayed. Additionally or alternatively, a timestamp contained in the touch event data indicates an event time of the touch event that lies within the display time interval. In other words, the touch sensing unit measures the time or registers the time when the touch event is signaled and describes the event time on the basis of a timestamp that is part of the touch event data. This allows for verifying the event time independently of the actual display time interval as the verification is also possible after the end of a display time interval when another image content may be displayed on the touch screen display.

In one embodiment, at least one sensor for verifying the touch event comprises at least one of the following sensor: a pressure sensor, an infrared sensor, a photosensor, a camera. A pressure sensor may sense pressure that is generated by the touch element when the user touches the touch screen display. For example, the pressure sensor may sense a force that is acting on a screen of the touch screen display as a whole. This is different from a pressure sensor unit registering the exact coordinates or position of the touch events on basis of local pressure sensor. An infrared sensor may detect the warmth or infrared light emitted by a finger or another body part of the user. The infrared sensor may also register reflected infrared light that may be provided by an infrared light emitting diode. A photosensor may detect if the touch screen display is covered by an object such as a touch element as this may change the amount of light reaching the touch screen display. The photosensor may also detect the interruption of a light beam that may be directed to the photosensor and may be generated by a light emitting diode. A camera may provide image data that may be evaluated as regards the position of the touch element. To this end, a processor may be provided that may analyze the image data on the basis of an object recognition algorithm, that may be based on e.g. an artificial neural network.

In one embodiment, some or all of the data exchanged between the control unit and the touch screen input device are provided with an identifier of the sending unit (i.e. an identifier of the control unit and an identifier of the touch screen input device or the render monitoring unit or the touch sensing unit). This ensures that only such data are accepted that originate from the correct data source for the specific type of data. Additionally or alternatively, the data may be provided with a timestamp for which the data are valid and/or a cyclic period of an image frame for which the data are valid (i.e. which a current image is described or related to the data) and/or a hash value and/or a CRC-value for providing transfer redundancy.

The invention also provides the combination of the electronic control unit and the touch screen input device. This combination is referred to as vehicle operating apparatus comprising the electronic control unit and the touch screen input device. The electronic control unit and the touch screen input device are designed to perform a method according to the present invention.

To this end, the control unit and the touch screen input device may each comprise a respective processing unit for performing the method steps according to the invention. Each processing unit may comprise at least one micro-controller and/or at least one micro-processor and/or an FPGA (field programmable gate array) and/or an ASIC (application specific integrated circuit) which may execute the method steps. A data memory may comprise program code or software instructions that are executed by the processing unit and may cause the processing unit to execute or perform the method steps. The respective processing unit may be secured or designed according to a safety level according to the above-described standard ISO 262. Preferably, the safety level is ASIL B or higher.

Finally, the invention also provides a motor vehicle comprising at least one vehicle operating apparatus according to the invention.

The vehicle operating apparatus is designed for activating at least one vehicle function as a function or in reaction to a user input that may be provided to a respective control field of a graphical user interface displayed on a touch screen display.

The motor vehicle is preferably designed as a passenger vehicle or a truck, or as a bus or a motor cycle.

In the following an exemplary implementation of the invention is described. The single figure (Fig.) shows:
- Fig.: a schematic illustration of the inventive motor vehicle.

In the figure identical reference signs indicate elements that provide the same function.

The figure shows a motor vehicle 10 which can be, for example, a passenger vehicle or a truck. In the vehicle, a vehicle operating apparatus 11 is provided that is used by a user of the vehicle for triggering or activating a vehicle function 12. The vehicle operating apparatus may be designed to trigger more than one vehicle function, but for the sake of gravity only one vehicle function 12 is illustrated.

For triggering or activating the vehicle function 12, the vehicle operating apparatus provides a touch screen input device 13 with a touch screen display 14. By means of the touch screen display 14 a graphical user interface GUI is displayed. The graphical user interface GUI comprises a control field 15, which can be designed as, e.g., a button or a slider or a knob. The graphical user interface GUI may also comprise more than the control field 15, for example one or more other control field and/or informational texts or graphics.

A selection of control fields shown on the graphical user interface GUI may be at least partially determined by an electronic control unit 16, in other words, the control unit 16 operates at least a part of the graphical user interface GUI in such a way that the control unit 16 determines which control field 15 received a user input 17, for example a touch event 18 that the user may cause by touching the touch screen display 14 with a finger. The control unit 16 also activates or triggers the vehicle function 12 whenever a control field 15 associated with the vehicle function 12 receives the user input 17.

For creating or setting up the graphical user interface GUI the control unit 16 provides graphical information regarding the control field 15, for example its position and/or size on the graphical user interface GUI of the touch screen display 14. To this end, the control unit 16 provides render data 19 to the touch screen input device 13. The render data 19 is received by the touch screen input device 13.

The touch screen input device 13 uses at least a part of the received render data 19 as pixel data 21 and sets the pixel data 21 in a display buffer 22, especially a line buffer 23 of the touch screen display 14. This process is known from the prior art. By setting pixel data 21 in the display buffer 22, the touch screen input device 13 sets the appearance (color and/or intensity/brightness) of the individual pixels of the touch screen display 14. However, as transmission errors and/or another source of error may falsify the render data 19 and/or the pixel data 21, it is not guaranteed that the control field 15 appears on the graphical user interface GUI in the way the render data 19 describe it.

For verifying correct appearance of the control field 15 on the graphical user interface GUI, a render monitoring unit 20 reads back or reads out the final pixel data 24 as they are stored in the display buffer 22 as the true graphical content of the actually displayed graphical user interface GUI. Especially, those lines or the area determined for the control field 15 are chosen for reading the pixel data 24. The render monitoring unit 20 reads out an area determined by coordinates X1, Y1 (top left corner) to X2, Y2 (bottom right corner) of the control field 15. Render monitoring unit 20 may use a timing controller 25 for selecting the lines and within the lines the section X1 to X2 for determining the correct pixel data 24. The pixel data 24 are provided to a first checksum function 26 as an input for generating first checksum data 27 which are provided to the control unit 16. The checksum data 27 may be CRC-value. To this end, operations of the checksum function 26 may be based on an CRC-algorithm.

The electronic control unit 16 receives the checksum data 27. Additionally, the control unit 16 also generates by means of a corresponding checksum function 28 corresponding checksum data 29 on basis of the render data 19. The control unit 16 then compares checksum data 27 with checksum data 29 for determining whether the control field 15 has been displayed on the graphical user interface GUI in the same way as render data 19 described the control field 15. If checksum data 27 and checksum data 29 differ, an error signal 30 is generated indicating that the control field 15 is not displayed correctly.

When the user provides user input 17 on the touch screen display 14, this generates the touch event 18 that is detected by a touch sensing unit 31 of touch screen input device 13. For example, touch screen display 14 may comprise a touch sensitive and/or approach sensitive sensor unit on the basis of capacitive sensors distributed over the touch screen display 14. This technology is known from the prior art.

Once the touch event 18 is detected by the touch sensing unit 31, a corresponding touch event data 32 are generated by touch sensing unit 31 and are sent to a control unit 16. Touch event data 32 describe the coordinates 33 of the touch event 18 on the touch screen display 14.

Control unit 16 compares or verifies that the received coordinates 33 lie within boundaries of the control field 15, wherein the boundaries may be described by boundary data 34. In the figure, this is symbolized by illustrating that the coordinates 33 shall be an element of the set of possible points that lie within the boundaries that are described by the boundary data 34. If the coordinates 33 lie within the boundaries according to the boundary data 34, the control unit 16 triggers or activates device function 12. This also depends on the described comparison of the checksums data 27 and 29. This then verifies that the control field 15 was displayed on the graphical user interface GUI at the time when touch event 18 was received and that the touch event 18 was positioned within the boundaries according to the boundary data 34 of the control field 15.

Otherwise, if the error signal 30 has been generated and/or the coordinates 33 are outside the control field 15, the vehicle function 12 will not be triggered or activated.

In current and in particular in future vehicle architectures more and more functionality is integrated into a single vehicle computer (also known as a High-performance Computing Platforms (HCP)). This is on one hand due to cost advantages by using synergies and sharing of resources and on the other hand due to increasing flexibility.

In particular there is one common electronic control unit (ECU) e.g. for the Cockpit HCP, which is responsible for the graphical user interface (GUI) and which therefore integrates infotainment/entertainment functionality as well as functionality which supports user interaction input. Some of these controls are already integrated into the HMI Displays and Controls (HMI - Human Machine Interface), e.g. climate control.

However, others are susceptible to safety related topics, hence until now not sensible to integrate on non-safety relevant ECUs, i.e. vehicle functions like spoiler control, roof opening/closing, start-stop functionality.

The standard ISO26262 is currently the state of the art reference for automotive safety relevant systems, components or functions. Systems are classified from ASIL A, up to ASIL D (most stringent safety rating).

It would be of advantage, if safety relevant controls (i.e. control fields like buttons or knobs) could be integrated into touch display interfaces.

The present invention is concerned with a method for coordinating an electronic control unit 16 and a touch screen input device 13 in a motor vehicle 10, wherein the electronic control unit 16 operates a graphical user interface GUI with a control field 15 and wherein a render monitoring unit 20 of the touch screen input device 13 monitors the touch screen display 14 for displaying the graphical user interface GUI. The method further comprises that the control unit 16 receives second checksum data 27 from the render monitoring unit 20, the second checksum data 27 representing actually displayed pixel data 24 of the control field 15, and compares the received second checksum data 27 with first checksum data 29, the first checksum data 29 representing render instructions for the control field 15, and, if the first checksum data 29 and the second checksum data 27 differ from each other, the control unit 16 generates an error signal 30 that signals that the control field 15 is not displayed correctly on the touch screen display 14.

Checksum functions 26 and 28 are the same in that they comprise the same mathematical operations such that they produce the same checksum data, if provided with the same input data.

It is therefore possible to provide the following functionalities:
1. Displaying of the applicable button on the screen (up to ASIL B)
2. Receive and verify the touch user input (up to ASIL B)
3. Process the input and interaction correctly to trigger the digital button intended functionality.

This is achieved by integrating safety relevant classical controls and buttons, into digital HMI display and panels. This could allow cost savings (buttons, ECUs, cables, weight), plus also a customizable interface as well as a more homogeneous HMI through all displays.

Typically safety relevant buttons, are discrete ones, controlled by a suitable ECU. These makes it hard to even consider integrating them on a display and turning them into soft digital buttons. The ON/OFF/SETTINGS actions of such functions shall be ensured and covered from failures per ASIL B ISO26262 requirements in this case.

The problem about replacing them via SW controls, is how to ensure that the button will always be there when required, as well as assessing accurately that the button was or was not pressed by the user.
- The HCP/ECU renders the digital button when indicated (known size, position and appearance) fulfilling ASIL B.
- When the user touches the display area where the button is displayed, the coordinates, or area, is processed by the display touch controller, which in ASIL B confirms the touch is correct. This information is sent back to the HCP/ECU.
- The ECU verifies if the touch area received matches the button location, as rendered.
- The button function is triggered internally, or the signal sent out to another component as applicable (i.e spoiler, roof, etc).

In the following topics are listed which optimize the described idea, extend the invention or constitute an alternative aspect of the invention:
1. Optionally, if further re-assurements might be required by the function, IR receivers/emitters could be placed pointing to the button location. In this way, a redundancy on top of the touch input could be implemented (i.e to achieve higher safety requirements).

The benefits of the ideas compared to the current situation are:
- Cost (parts, ECUs, cabling, LEDs), weights reduction
- Faster time to market (reduced supplier chain)
- Button re-design change could become possible (before SOP or post SOP - start of production)
- Customizable HMI, among all displays

Thus, in general the invention is concerned with a method for coordinating an electronic control unit (16) and a touch screen input device (13) in a motor vehicle (10), wherein the electronic control unit (16) operates a graphical user interface (GUI) with a control field (15) and wherein a render monitoring unit (20) of the touch screen input device (13) controls a touch screen display (14) for displaying the graphical user interface (GUI). The method further comprises that the control unit (16) receives second checksum data (27) from the render monitoring unit (20), the second checksum data (27) representing actually displayed pixel data (24) of the control field (15), and compares the received second checksum data (27) with first checksum data (29), the first checksum data (29) representing render instructions for the control field (15), and, if the first checksum data (29) and the second checksum data (27) differ from each other, the control unit (16) generates an error signal (30) that signals that the control field (15) is not displayed correctly on the touch screen display (14).

The example shows how safety relevant touch controls can be provided on a graphical user interface of a touch screen.

## Claims

1. Method for coordinating an electronic control unit (16) and a touch screen input device (13) in a motor vehicle (10), wherein
- the electronic control unit (16) operates a graphical user interface (GUI) for activating a predefined vehicle function (12) in reaction to receiving a user input (17) at a control field (15) of the graphical user interface (GUI) and wherein
the touch screen input device (13) controls a touch screen display (14) for displaying the graphical user interface (GUI), wherein
the control unit (16)
- generates render data (19) for displaying the control field (15), wherein the render data define the position and/or graphical appearance of the control field, and
- calculates first checksum data (29) on the basis of a predefined checksum function (28), wherein as an input for the checksum function (28) the render data (19) are provided, and
- sends the render data (19) to the touch screen input device (13), and the touch screen input device (13)
- sets pixel data (21) in a display buffer (22) of the touch screen display (14) for displaying the control field (15) on the touch screen display (14) on the basis of the received render data (19), and a render monitoring unit (20) of the touch screen input device (13)
- reads the pixel data (24) from the display buffer (22) and
- calculates second checksum data (27) on the basis of the same checksum function (26), wherein as an input for the checksum function (26) the pixel data (24) read from the display buffer (22) are provided, and
- sends the second checksum data (27) to the control unit (16), and
the control unit (16)
- receives the second checksum data (27) and compares the received second checksum data (27) with the first checksum data (29) and,
- if the first checksum data (29) and the second checksum data (27) differ from each other, the control unit (16) generates an error signal (30) that signals that the control field (15) is not displayed correctly on the touch screen display (14),
- the method is **characterized in that**
- a touch sensing unit (31) of the touch screen input device (13) receives a touch event signal of a touch event (18) from the touch screen display (14) and generates touch event data (32) that comprise coordinates (33) and/or an area identifier of the touch event (18) and sends the touch event data (32) to the control unit (16), and
- the control unit (16) verifies that the received touch event data (32) actually signal that the touch event (18) is positioned on the touch screen display (14) within boundaries of the control field (15) as they are defined by the render data (19), and, only if the touch event (18) is detected to lie within the boundaries, the vehicle function (12) is activated, and
- the control unit (16) registers a display time interval that describes when the control field (15) is to be displayed according to the render data (19) and the control unit (16) verifies that the touch event data (32) signal that the touch event (18) occurred within the display time interval, wherein
- the verification of the display time interval comprises that the control unit (16) receives a respective sensor signal from at least one sensor for verifying the touch event (18), wherein a respective sensing field of the at least one sensor is directed to a surface and/or to surroundings of the touch screen display and the at least one sensor generates its sensor signal in dependence on a presence and/or movement of a predefined touch element in the respective sensing field.

2. Method according to claim 1, wherein the checksum function (26, 28) comprises the calculation of at least one of the following values: a cyclic redundancy check and a hash value.

3. Method according to any of the preceding claims, wherein the pixel data (24) for calculating the second checksum data are read from a line buffer of the touch screen display (14).

4. Method according to any of the preceding claims, wherein the render monitoring unit (20) is based on a timing controller, TCON.

5. Method according to any of the preceding claims, wherein the checksum data (27, 29) are additionally based on display coordinates (33) of the pixel data (24).

6. Method according to any of the preceding claims, wherein the verification of the display time interval comprises that the touch event data (32) are received within the display time interval and/or a timestamp contained in the touch event data (32) indicates an event time of the touch event (18) that lies within the display time interval.

7. Method according to any of the preceding claims, wherein at least one sensor for verifying the touch event (18) comprises at least one of the following sensors: a pressure sensor, an infrared sensor, a photo sensor, and a camera.

8. Method according to any of the preceding claims, wherein some or all of the data (19, 32, 27) exchanged between the control unit (16) and the touch screen input device (13) are provided with an identifier of the respective sending unit and/or a timestamp for which the data are valid and/or a cyclic period of an image frame for which the data are valid and/or a hash value and/or a CRC-value for providing transfer redundancy.

9. Vehicle operating apparatus (11) comprising an electronic control unit (16) and a touch screen input device (13), wherein the electronic control unit (13) and the touch screen input device (13) are adapted to perform a method according to any of the preceding claims.

10. Motor vehicle (10) comprising at least one vehicle operating apparatus (11) according to claim 9.

## Patentansprüche

1. Verfahren zur Koordination einer elektronischen Steuereinheit (16) und einer Touchscreen-Eingabevorrichtung (13) in einem Kraftfahrzeug (10), wobei
- die elektronische Steuereinheit (16) eine grafische Benutzeroberfläche (GUI) zum Aktivieren einer vordefinierten Fahrzeugfunktion (12) als Reaktion auf den Empfang einer Benutzereingabe (17) an einem Steuerfeld (15) der grafischen Benutzeroberfläche (GUI) betreibt und wobei
die Touchscreen-Eingabevorrichtung (13) eine Touchscreen-Anzeige (14) zur Darstellung der grafischen Benutzeroberfläche (GUI) steuert, wobei
die Steuereinheit (16)
- Rendering-Daten (19) zur Anzeige des Steuerfeldes (15) erzeugt, wobei die Rendering-Daten die Position und/oder das grafische Aussehen des Steuerfeldes definieren, und
- erste Prüfsummendaten (29) auf der Basis einer vordefinierten Prüfsummenfunktion (28) berechnet, wobei als Eingabe für die Prüfsummenfunktion (28) die Rendering-Daten (19) bereitgestellt werden, und
- die Rendering-Daten (19) an die Touchscreen-Eingabevorrichtung (13) sendet, und
die Touchscreen-Eingabevorrichtung (13)
- Pixeldaten (21) in einem Anzeigepuffer (22) der Touchscreen-Anzeige (14) zur Anzeige des Steuerfeldes (15) auf der Touchscreen-Anzeige (14) auf der Basis der empfangenen Rendering-Daten (19) einstellt, und
eine Rendering-Überwachungseinheit (20) der Touchscreen-Eingabevorrichtung (13)
- die Pixeldaten (24) aus dem Anzeigepuffer (22) liest und
- zweite Prüfsummendaten (27) auf der Basis derselben Prüfsummenfunktion (26) berechnet, wobei als Eingabe für die Prüfsummenfunktion (26) die aus dem Anzeigepuffer (22) gelesenen Pixeldaten (24) bereitgestellt werden, und
- die zweiten Prüfsummendaten (27) an die Steuereinheit (16) sendet, und die Steuereinheit (16)
- die zweiten Prüfsummendaten (27) empfängt und die empfangenen zweiten Prüfsummendaten (27) mit den ersten Prüfsummendaten (29) vergleicht und,
- wenn sich die ersten Prüfsummendaten (29) und die zweiten Prüfsummendaten (27) voneinander unterscheiden, die Steuereinheit (16) ein Fehlersignal (30) erzeugt, das signalisiert, dass das Steuerfeld (15) auf dem Touchscreen-Display (14) nicht korrekt angezeigt wird,
- das Verfahren **dadurch gekennzeichnet ist, dass**
- eine Berührungserfassungseinheit (31) der Touchscreen-Eingabevorrichtung (13) ein Berührungsereignissignal eines Berührungsereignisses (18) von der Touchscreen-Anzeige (14) empfängt und Berührungsereignisdaten (32) erzeugt, die Koordinaten (33) und/oder eine Bereichskennung des Berührungsereignisses (18) umfassen, und die Berührungsereignisdaten (32) an die Steuereinheit (16) sendet, und
- dass die Steuereinheit (16) prüft, ob die empfangenen Berührungsereignisdaten (32) tatsächlich signalisieren, dass das Berührungsereignis (18) auf der Touchscreen-Anzeige (14) innerhalb von Grenzen des Steuerfeldes (15), wie sie durch die Rendering-Daten (19) definiert sind, positioniert ist, und nur wenn erkannt wird, dass das Berührungsereignis (18) innerhalb der Grenzen liegt, die Fahrzeugfunktion (12) aktiviert wird, und
- die Steuereinheit (16) ein Anzeigezeitintervall registriert, das beschreibt, wann das Steuerfeld (15) gemäß den Renderdaten (19) angezeigt werden soll, und die Steuereinheit (16) verifiziert, dass die Berührungsereignisdaten (32) signalisieren, dass das Berührungsereignis (18) innerhalb des Anzeigezeitintervalls aufgetreten ist, wobei
- die Überprüfung des Anzeigezeitintervalls umfasst, dass die Steuereinheit (16) ein jeweiliges Sensorsignal von mindestens einem Sensor zur Überprüfung des Berührungsereignisses (18) empfängt, wobei ein jeweiliges Erfassungsfeld des mindestens einen Sensors auf eine Oberfläche und/oder auf die Umgebung der Touchscreen-Anzeige gerichtet ist und der mindestens eine Sensor sein Sensorsignal in Abhängigkeit von einem Vorhandensein und/oder einer Bewegung eines vordefinierten Berührungselements in dem jeweiligen Erfassungsfeld erzeugt.

2. Verfahren nach Anspruch 1, wobei die Prüfsummenfunktion (26, 28) die Berechnung von mindestens einem der folgenden Werte umfasst: eine zyklische Redundanzprüfung und einen Hash-Wert.

3. Verfahren nach einem der vorstehenden Ansprüche, wobei die Pixeldaten (24) zur Berechnung der zweiten Prüfsummendaten aus einem Zeilenpuffer des Touchscreen-Displays (14) gelesen werden.

4. Verfahren nach einem der vorstehenden Ansprüche, wobei die Rendering-Überwachungseinheit (20) auf einem Timing-Controller, TCON, basiert.

5. Verfahren nach einem der vorstehenden Ansprüche, wobei die Prüfsummendaten (27, 29) zusätzlich auf Anzeigekoordinaten (33) der Pixeldaten (24) basieren.

6. Verfahren nach einem der vorstehenden Ansprüche, wobei die Überprüfung des Anzeigezeitintervalls umfasst, dass die Berührungsereignisdaten (32) innerhalb des Anzeigezeitintervalls empfangen werden und/oder ein in den Berührungsereignisdaten (32) enthaltener Zeitstempel einen Ereigniszeitpunkt des Berührungsereignisses (18) angibt, der innerhalb des Anzeigezeitintervalls liegt.

7. Verfahren nach einem der vorstehenden Ansprüche, wobei mindestens ein Sensor zur Verifizierung des Berührungsereignisses (18) mindestens einen der folgenden Sensoren umfasst: einen Drucksensor, einen Infrarotsensor, einen Fotosensor und eine Kamera.

8. Verfahren nach einem der vorstehenden Ansprüche, wobei einige oder alle der zwischen der Steuereinheit (16) und der Touchscreen-Eingabevorrichtung (13) ausgetauschten Daten (19, 32, 27) mit einer Kennung der jeweiligen Sendeeinheit und/oder einem Zeitstempel, für den die Daten gültig sind, und/oder einer zyklischen Periode eines Bildrahmens, für die die Daten gültig sind, und/oder einem Hash-Wert und/oder einem CRC-Wert zur Bereitstellung von Übertragungsredundanz versehen werden.

9. Fahrzeugbedieneinrichtung (11), umfassend eine elektronische Steuereinheit (16) und eine Touchscreen-Eingabevorrichtung (13), wobei die elektronische Steuereinheit (13) und die Touchscreen-Eingabevorrichtung (13) so angepasst sind, dass sie ein Verfahren nach einem der vorstehenden Ansprüche durchführen.

10. Kraftfahrzeug (10), umfassend mindestens eine Fahrzeugeinrichtung (11) nach Anspruch 9.

## Revendications

1. Procédé de coordination d'une unité de commande électronique (16) et d'un dispositif d'entrée d'écran tactile (13) dans un véhicule automobile (10), dans lequel
- l'unité de commande électronique (16) actionne une interface utilisateur graphique (GUI) pour activer une fonction de véhicule prédéfinie (12) en réaction à la réception d'une entrée utilisateur (17) dans un champ de commande (15) de l'interface utilisateur graphique (GUI) et dans lequel
le dispositif d'entrée d'écran tactile (13) commande un affichage d'écran tactile (14) pour afficher l'interface utilisateur graphique (GUI), dans lequel
l'unité de commande (16)
- génère des données de rendu (19) pour afficher le champ de commande (15), dans lequel les données de rendu définissent la position et/ou l'apparence graphique du champ de commande, et
- calcule de premières données de somme de contrôle (29) sur la base d'une fonction de somme de contrôle prédéfinie (28), dans lequel les données de rendu (19) sont fournies en tant qu'entrée pour la fonction de somme de contrôle (28), et
- envoie les données de rendu (19) au dispositif d'entrée d'écran tactile (13), et
le dispositif d'entrée d'écran tactile (13)
- définit des données de pixel (21) dans un tampon d'affichage (22) de l'affichage d'écran tactile (14) pour afficher le champ de commande (15) sur l'affichage d'écran tactile (14) sur la base des données de rendu reçues (19), et
une unité de surveillance de rendu (20) du dispositif d'entrée d'écran tactile (13)
- lit les données de pixel (24) à partir du tampon d'affichage (22) et
- calcule de secondes données de somme de contrôle (27) sur la base de la même fonction de somme de contrôle (26), dans lequel les données de pixel (24) lues à partir du tampon d'affichage (22) sont fournies en tant qu'entrée pour la fonction de somme de contrôle (26), et
- envoie les secondes données de somme de contrôle (27) à l'unité de commande (16), et
l'unité de commande (16)
- reçoit les secondes données de somme de contrôle (27) et compare les secondes données de somme de contrôle reçues (27) aux premières données de somme de contrôle (29) et,
- si les premières données de somme de contrôle (29) et les secondes données de somme de contrôle (27) diffèrent les unes des autres, l'unité de commande (16) génère un signal d'erreur (30) qui signale que le champ de commande (15) ne s'affiche pas correctement sur l'affichage d'écran tactile (14),
- le procédé est **caractérisé en ce**
- **qu'**une unité de détection tactile (31) du dispositif d'entrée d'écran tactile (13) reçoit un signal d'événement tactile d'un événement tactile (18) à partir de l'écran tactile (14) et génère des données d'événement tactile (32) qui comprennent des coordonnées (33) et/ou un identificateur de zone de l'événement tactile (18) et envoie les données d'événement tactile (32) à l'unité de commande (16), et
- l'unité de commande (16) vérifie que les données d'événement tactile reçues (32) signalent en fait que l'événement tactile (18) est positionné sur l'écran tactile (14) au sein des limites du champ de commande (15) telles qu'elles sont définies par les données de rendu (19) et, uniquement si l'événement tactile (18) est détecté comme se trouvant au sein des limites, la fonction véhicule (12) est activée, et
- l'unité de commande (16) enregistre un intervalle de temps d'affichage qui décrit quand le champ de commande (15) doit être affiché en fonction des données de rendu (19) et l'unité de commande (16) vérifie que les données d'événement tactile (32) signalent que l'événement tactile (18) s'est produit au sein de l'intervalle de temps d'affichage, dans lequel
- la vérification de l'intervalle de temps d'affichage comprend le fait que l'unité de commande (16) reçoit un signal de capteur respectif à partir d'au moins un capteur pour vérifier l'événement tactile (18), dans lequel un champ de détection respectif de l'au moins un capteur est dirigé vers une surface et/ou aux environs de l'affichage d'écran tactile et l'au moins un capteur génère son signal de capteur en fonction d'une présence et/ou d'un mouvement d'un élément tactile prédéfini dans le champ de détection respectif.

2. Procédé selon la revendication 1, dans lequel la fonction de somme de contrôle (26, 28) comprend le calcul d'au moins une des valeurs suivantes : un contrôle de redondance cyclique et une valeur de hachage.

3. Procédé selon l'une quelconque des revendications précédentes, dans lequel les données de pixel (24) pour calculer les secondes données de somme de contrôle sont lues à partir d'un tampon de ligne de l'affichage d'écran tactile (14).

4. Procédé selon l'une quelconque des revendications précédentes, dans lequel l'unité de surveillance de rendu (20) est basée sur un contrôleur de synchronisation, TCON.

5. Procédé selon l'une quelconque des revendications précédentes, dans lequel les données de somme de contrôle (27, 29) sont en outre basées sur des coordonnées d'affichage (33) des données de pixel (24).

6. Procédé selon l'une quelconque des revendications précédentes, dans lequel la vérification de l'intervalle de temps d'affichage comprend le fait que les données d'événement tactile (32) sont reçues au sein de l'intervalle de temps d'affichage et/ou un horodatage contenu dans les données d'événement tactile (32) indique un temps d'événement de l'événement tactile (18) qui se situe au sein de l'intervalle de temps d'affichage.

7. Procédé selon l'une quelconque des revendications précédentes, dans lequel au moins un capteur pour vérifier l'événement tactile (18) comprend au moins un des capteurs suivants : un capteur de pression, un capteur infrarouge, un capteur photo, et une caméra.

8. Procédé selon l'une quelconque des revendications précédentes, dans lequel certaines ou toutes les données (19, 32, 27) échangées entre l'unité de commande (16) et le dispositif d'entrée d'écran tactile (13) sont dotées d'un identifiant de l'unité d'envoi respective et/ou un horodatage pour lequel les données sont valides et/ou une période cyclique d'une trame d'image pour laquelle les données sont valides et/ou une valeur de hachage et/ou une valeur CRC pour fournir une redondance de transfert.

9. Appareil de commande de véhicule (11) comprenant une unité de commande électronique (16) et un dispositif d'entrée d'écran tactile (13), dans lequel l'unité de commande électronique (13) et le dispositif d'entrée d'écran tactile (13) sont adaptés pour exécuter un procédé selon l'une quelconque des revendications précédentes.

10. Véhicule automobile (10) comprenant au moins un appareil de commande de véhicule (11) selon la revendication 9.
